# EUROPÄISCHE PATENTSCHRIFT

(11) **EP 0 870 116 B1**
(45) Veröffentlichungstag und Bekanntmachung des Hinweises auf die Patenterteilung: **09.10.2002**
(21) Anmeldenummer: 95931133.3
(22) Anmeldetag: 13.09.1995
(51) Int. Cl.: F15D 1/12

(54) **VORRICHTUNG ZUR BRECHUNG VON STRÖMUNGSWIRBELN AN EINER TURBULENT UMSTRÖMTEN FLÄCHE**
DEVICE FOR BREAKING WHIRLS AT A SURFACE SUBMERGED BY A TURBULENT FLOW
DISPOSITIF POUR BRISER DES TOURBILLONS SUR UNE SURFACE SUBMERGEE PAR UN COURANT TURBULENT

(30) Priorität: 16.09.1994 DE 4433021
(43) Veröffentlichungstag der Anmeldung: 14.10.1998
(73) Patentinhaber: Forschungszentrum Jülich GmbH, 52425 Jülich (DE)
(72) Erfinder: FREMEREY, Johan, K., D-53129 Bonn (DE); POLACHOWSKI, Stephan, D-52441 Linnich (DE); REIFF, Heinrich, D-52382 Niederzier (DE)
(86) Internationale Anmeldenummer: DE9501258
(87) Internationale Veröffentlichungsnummer: WO96008658

(56) Entgegenhaltungen:
- EP-A- 0 042 613
- PATENT ABSTRACTS OF JAPAN vol. 16, no. 414 (M-1303) 2. September 1992 & JP,A,04 138 994 (MITSUBISHI) 13. Mai 1992

## Beschreibung

Die Erfindung bezieht sich auf eine Vorrichtung zur Brechung von Strömungswirbeln an einer turbulent umströmten Fläche.

An gas- oder flüssigkeitsumströmten Flächen treten oberhalb bestimmter Strömungsgeschwindigkeiten Turbulenzen auf, die mit steigender Strömungsgeschwindigkeit durch zunehmende Wirbelgröße gekennzeichnet sind. Die mit der Wirbelbildung einhergehenden Kräfte können in ungünstigen Fällen die umströmten Flächen zum Flattern anregen. Insbesondere in schnelldrehenden Maschinen können solche Kräfte unerwünschte Störungen, insbesondere Präzessions-, Nutations- und Biegeeigenfrequenzen des Systems anregen.

Besonders gravierend machen sich solche Störungen an Zentrifugen bemerkbar, wenn diese zwecks Erzielung hoher Dauergeschwindigkeiten mit berührungslosen, magnetischen Lagern ausgerüstet werden. Es ist dann notwendig, die auftretenden Störkräfte durch elektronisches Stabilisieren der Magnetlagerung auszuregeln, wobei Energieverluste auftreten.

Es ist Aufgabe der Erfindung, eine Vorrichtung zu schaffen, mit deren Hilfe die aus Turbulenzwirbeln an einer umströmten Fläche resultierenden Kräfte innerhalb des Eigenfrequenzbereiches der umströmten Fläche bzw. ihrer Aufhängung weitgehend unwirksam gemacht werden können, ohne daß erhöhte Energieverluste in Kauf genommen werden müssen. Insbesondere sollen aus Turbulenzwirbeln an einem magnetisch gelagerten zylindrischen Rotor resultierende Radialkräfte im Bereich der Lagereigenfrequenz des Magnetlagersystems abgefangen werden.

Diese Aufgabe wird durch die im Patentanspruch 1 angegebenen Merkmale gelöst.

Dem Erfindungsgedanken liegt die Überlegung zugrunde, daß sich Turbulenzwirbel dann störend auf die stabile Lage einer umströmten Fläche auswirken, wenn sich das Frequenzspektrum der Turbulenzwirbel bzw. das Spektrum der mit den Wirbeln einhergehenden, auf die umströmte Fläche wirkenden Kräfte, insbesondere das Frequenzspektrum der an einem magnetisch gelagerten Rotor angreifenden Radialkräfte, und das Eigenfrequenzspektrum der Fläche bzw. des Magnetlagersystems gegenseitig überlappen. Die erfindungsgemäße Idee besteht darin, durch Brechung, d.h. Zerkleinern der Wirbel deren Frequenzspektrum in einen Bereich zu verschieben, der genügend weit oberhalb der kritischen Eigenfreqüenzen des Systems liegt. Es wird in geringem Abstand zur umströmten Fläche eine periodisch strukturierte Wand eingesetzt, insbesondere kommen als Struktur periodisch verteilte Noppen oder Stege auf der Wand und/oder Öffnungen in der Wand in Betracht, wobei die Abmessungen und gegenseitigen Abstände der Strukturelemente und der Abstand der Wand von der umströmten Fläche im wesentlichen gleich groß sind. Der Abstand der Wand zur umströmten Fläche bestimmt die maximal noch entstehende bzw. für den jeweiligen Anwendungsfall noch zulässige Wirbelgröße.

Das Anbringen einer gelochten, sieb- oder gitterartig strukturierten Wand, Patentanspruch 2, in der Nähe der umströmten Fläche, insbesondere einer schnell rotierenden Fläche, wie in Patentansprüchen 3 bis 5 angegeben, verhindert in erheblichem Maße die Ausbildung von längeren und dementsprechend niederfrequenten Wirbeln im kritischen Eigenfrequenzbereich und führt zu einer Beruhigung des dynamischen Systemverhaltens, insbesondere unter den Bedingungen magnetischer Lagerung, Patentanspruch 6.

Die Vorzüge der erfindungsgemäßen Vorrichtung sind mit Erfolg auch bei turbulenter Durchströmung von Rohren, Patentanspruch 7, bzw. an Flug- oder Schwimmkörpern, Patentanspruch 8, anwendbar.

Die Erfindung wird im folgenden anhand von Ausführungsbeispielen, die in der Zeichnung schematisch dargestellt sind, näher erläutert. Die Zeichnung zeigt im einzelnen:
- Figur 1: Lochwand vor einer Fläche mit tangentialer Umströmung;
- Figur 2: rotierender, magnetisch gelagerter Zylinder mit Lochwand;
- Figur 3: Strömungsrohr mit innenliegender Lochwand;
- Figur 4: umströmte Fläche eines Flug- oder Schwimmkörpers mit im Strömungsraum angeordneter Lochwand.

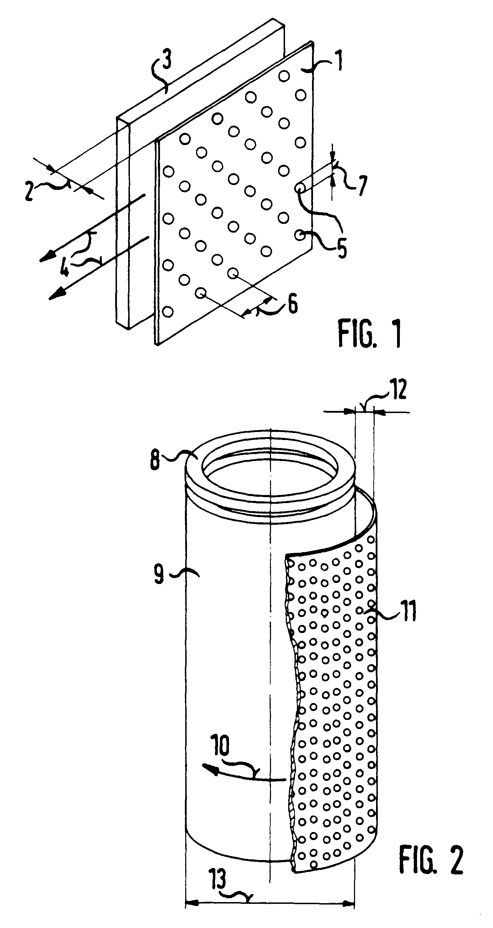

Figur 1 zeigt eine in Form eines Lochblechs strukturierte Wand 1, die mit Abstand 2 von einer umströmten Fläche 3 angeordnet ist. Die Strömungsrichtung des strömenden Mediums zwischen Fläche und Wand ist mit Pfeilen 4 markiert. Der Abstand 2 zwischen Wand 1 und Fläche 3 bestimmt in der turbulenten Strömung die noch ungestört verbleibende Wirbelgröße im strömenden Medium. Wirbel, die größer als der Abstand zwischen Fläche und Wand sind, werden gebrochen. Der zur Zerstörung unerwünscht großer Wirbel erforderliche Abstand 2 wird im wesentlichen empirisch ermittelt. Bei optimalem Abstand zwischen umströmter Fläche 3 und Wand 1 läßt sich ein Flattern der Fläche im Eigenfrequenzspektrum vermeiden. Insbesondere bei berührungsloser magnetischer Lagerung rotierender Körper ist eine stabile Rotorlage erreichbar.

Dem erforderlichen Abstand 2 entsprechend werden an der Wand 2 vorhandene Strukturelemente 5 und deren gegenseitige Abstände 6 bemessen. Bei der als Lochblech gestalteten strukturierten Wand 2 nach Figur 1 weisen die einzelnen Löcher als Strukturelemente 5 einen gegenseitigen Abstand 6 und Durchmesser 7 auf, deren Größe der Größe des Abstandes 2 entspricht.

Figur 2 zeigt einen von einem Magnetring 8 eines magnetischen Lagers berührungslos gelagerten Rotor 9, welcher in Rotationsrichtung 10 rotiert und an seiner Außenfläche infolge Reibung mit den Rotor umgebendem Gas, im Ausführungsbeispiel mit Luft, eine in Rotationsrichtung 10 gerichtete Gasströmung erzeugt. Eine konzentrisch zum Rotor 9 angeordnete, ebenfalls als Lochblech gestaltete Wand 11 ist feststehend montiert oder auch rotierend gelagert, wobei die Rotationsgeschwindigkeit der Wand 11 sehr viel geringer als die Rotationsgeschwindigkeit des Rotors 9 ist, z.B. nur ein Zehntel der Rotationsgeschwindigkeit des Rotors beträgt. Die Wand 11 sorgt für eine Brechung von bei hohen Rotationsgeschwindigkeiten auftretenden Turbulenzwirbeln, soweit deren Größe die Größe von Abstand 12 zwischen Wand 11 und Rotor 9 überschreitet. Im Ausführungsbeispiel weist der Rotor 9 einen Rotordurchmesser 13 von 40 mm auf, der Abstand 12 zwischen Rotor 9 und Wand 11 beträgt 2 mm, der Lochdurchmesser der Löcher im Lochblech ebenfalls 2 mm, der Lochabstand 4 mm. Beim Rotor 9 handelt es sich im Ausführungsbeispiel um eine rotierende Zentrifugierkammer einer Zentrifuge. Die Wand 11 ist an der äußeren Wandseite der Zentrifugierkammer außerhalb des als Arbeitsraum zum Zentrifugieren dienenden Innenraums der Kammer angeordnet.

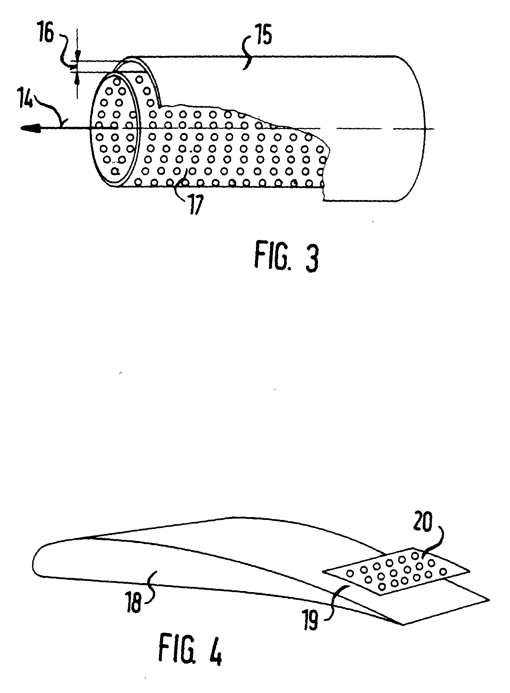

Figur 3 zeigt ein in Strömungsrichtung 14 von einem gasförmigen oder flüssigen Medium durchströmtes Rohr 15. Innerhalb des durchströmten Rohres 15 ist zur Brechung von Turbulenzwirbeln bei hoher Durchströmungsgeschwindigkeit mit Abstand 16 zur innenliegenden Rohrfläche eine als Lochblech ausgebildete Wand 17 angeordnet. Der Abstand der Wand zur innenliegenden Rohrfläche und die Abmessungen der Löcher als Strukturelemente der Wand entsprechen wieder den zur Figur 2 angegebenen Maßen.

Figur 4 zeigt ein Tragflügelprofil 18, welches an seiner oberen, von einem gasförmigen oder flüssigen Medium umströmten Fläche im Abströmbereich 19 des Tragflügelprofils eine wiederum als Lochblech ausgestattete Wand 20 zur Brechung von Turbulenzwirbeln im Abströmbereich trägt.

### Bezugszeichenliste

- Wand: 1, 11, 17, 20
- Abstand: 2, 12, 16
- Fläche: 3
- Pfeil: 4
- Strukturelemente: 5
- Abstände: 6
- Durchmesser: 7
- Magnetring: 8
- Rotor: 9
- Rotationsrichtung: 10
- Rotordurchmesser: 13
- Strömungsrichtung: 14
- Rohr: 15
- Tragflügelprofil: 18
- Abströmbereich: 19

## Patentansprüche

1. Vorrichtung zur Brechung von Strömungswirbeln an einer tangential und turbulent umströmten Fläche, aufweisend
eine periodisch strukturierte Wand (1, 11, 17,20), die im wesentlichen parallel und mit Abstand (2, 12, 16) zur umströmten Fläche (3, 9, 15, 18) angeordnet ist, wobei der Abstand (2, 12, 16) der Wand zur umströmten Fläche (3, 9, 15, 18) die maximal noch zulässige Wirbelgröße bestimmt und die Abmessungen und gegenseitigen Abstände der Strukturelemente (5) an der Wand (1, 11, 17, 20) im wesentlichen der Größe des Abstands (2, 12, 16) der Wand von der umströmten Fläche (3, 9, 15, 18) entsprechen.

2. Vorrichtung nach Anspruch 1,
**dadurch gekennzeichnet,**
**daß** die Wand (1, 11, 17, 20) als Lochblech bzw. Sieb oder Gitter ausgebildet ist.

3. Vorrichtung nach Anspruch 1 oder 2, **gekennzeichnet durch** Anordnung der Wand (11) an einer Fläche (9), die sich relativ zur Wand und im wesentlichen parallel zu dieser bewegt.

4. Vorrichtung nach Anspruch 3,
**dadurch gekennzeichnet,**
**daß** die Wand (11) an einer rotierend bewegten Fläche (9) angeordnet ist, wobei die Wand (11) feststeht oder wesentlich langsamer rotiert als die Fläche (9).

5. Vorrichtung nach Anspruch 3 oder 4,
**gekennzeichnet durch**
Einsatz der Wand (11) an einer umströmten Fläche (9) einer rotierenden Komponente einer Zentrifuge außerhalb des Arbeitsraums der Zentrifuge.

6. Vorrichtung nach einem der vorhergehenden Ansprüche 1 bis 4,
**gekennzeichnet durch**
Einsatz der Wand (11) an einer bewegten Fläche (9), die berührungslos, insbesondere magnetisch an einem feststehenden Körper (8) gelagert ist.

7. Vorrichtung nach Anspruch 1 oder 2,
**gekennzeichnet durch**
Einsatz der Wand (17) in gas- oder flüssigkeitsdurchströmten Rohren (15).

8. Vorrichtung nach Anspruch 1 oder 2,
**gekennzeichnet durch**
Einsatz der Wand (20) an einer umströmten Fläche (19) eines Flug- oder Schwimmkörpers.

## Claims

1. Device for breaking whirls at a tangentially and turbulently flowed around surface, comprising a periodically structured wall (1, 11, 17, 20) which is arranged substantially parallel to and at a distance (2, 12, 16) from the flowed around surface (3, 9, 15, 18), and the distance (2, 12, 16) between the wall and the flowed around surface (3, 9, 15, 18) determines the maximum still admissible whirl value, and the dimensions and respective distances between the structural elements (5) on the wall (1, 11, 17, 20) correspond essentially with the size of the distance (2, 12, 16) between the wall and the flowed around surface (3, 9, 15, 18).

2. Device according to Claim 1, **characterised in that** the wall (1, 11, 17, 20) is designed as a perforated metal sheet or sieve or grid.

3. Device according to Claim 1 or 2, **characterised by** an arrangement of the wall (11) on a surface (9) which moves relative to the wall and essentially parallel thereto.

4. Device according to Claim 3, **characterised in that** the wall (11) is arranged on a wall (9) of rotary movement, and the wall (11) is stationary or rotates substantially slower than the surface (9).

5. Device according to Claim 3 or 4, **characterised by** use of the wall (11) on a flowed around surface (9) of a rotary component of a centrifuge outside the working area of the centrifuge.

6. Device according to one of the above claims 1 to 4, **characterised by** use of a wall (11) on a moved surface (9) which is mounted contact free, in particular magnetically on a stationary body (8).

7. Device according to Claim 1 or 2, **characterised by** use of the wall (17) in pipes (15) which are flowed through by a gas or a liquid.

8. Device according to Claim 1 or 2, **characterised by** use of the wall (20) on the surface of a flowed around flying or floating body.

## Revendications

1. Dispositif pour briser des tourbillons sur une surface submergée par un courant tangentiel et turbulent comprenant une paroi à structuration périodique (1, 11, 17, 20), qui est disposée sensiblement en parallèle et avec un espacement (2, 12, 16) par rapport à la surface submergée par le courant (3, 9, 15, 18), l'espacement (2, 12, 16) de la paroi par rapport à la surface submergée par le courant (3, 9, 15, 18) définissant l'ampleur du tourbillon maximal qui est encore admissible et les dimensions et les espacements réciproques des éléments de structuration (5) sur la paroi (1, 11, 17, 20) correspondant pour l'essentiel à la taille de l'espacement (2, 12, 16) de la paroi par rapport à la surface submergée par le courant (3, 9, 15, 18).

2. Dispositif selon la revendication 1, **caractérisé en ce que** la paroi (1, 11, 17, 20) est réalisée en tant que tôle perforée, comme tamis ou comme grille.

3. Dispositif selon la revendication 1 ou 2, **caractérisé en ce que** la paroi (11) est disposée en liaison avec une surface (9), qui se déplace par rapport à la paroi et sensiblement parallèlement à celle-ci.

4. Dispositif selon la revendication 3, **caractérisé en ce que** la paroi (11) est disposée en liaison avec une surface se déplaçant en rotation (9), la paroi (11) étant fixe ou tournant nettement plus lentement que la surface (9).

5. Dispositif selon la revendication 3 ou 4, **caractérisé en ce que** la paroi (11) est utilisée en liaison avec une surface submergée par le courant (9) d'une composante rotative d'une centrifugeuse en dehors du compartiment de travail de la centrifugeuse.

6. Dispositif selon l'une des revendications précédentes 1 à 4, **caractérisé en ce que** la paroi (11) est utilisée en liaison avec une surface en mouvement (9), qui est placée sans contact, en particulier de façon magnétique, sur un corps fixe (8).

7. Dispositif selon la revendication 1 ou 2, **caractérisé en ce que** la paroi (17) est utilisée dans des tubes (15) traversés par des gaz ou par des liquides.

8. Dispositif selon la revendication 1 ou 2, **caractérisé en ce que** la paroi (20) est utilisée en liaison avec une surface submergée par le courant (19) d'un objet volant ou flottant.
